# FASCICULE DE BREVET EUROPEEN

(11) **EP 3 599 044 B1**
(45) Date de publication et mention de la délivrance du brevet: **19.07.2023**
(21) Numéro de dépôt: 19186431.3
(22) Date de dépôt: 16.07.2019
(51) Int. Cl.: B23H 1/02, B23H 7/04, B23H 7/20

(54) **PROCEDE ET DISPOSITIF DE PREVENTION DES RUPTURES DE FIL ELECTRODE LORS D'UN USINAGE PAR ETINCELAGE EROSIF**
VERFAHREN UND VORRICHTUNG ZUM VERHINDERN DES REISSENS DES ELEKTRODENDRAHTS BEI DER BEARBEITUNG MIT FUNKENEROSION
METHOD AND DEVICE FOR PREVENTING BREAKAGE OF THE ELECTRODE WIRE DURING SPARK-EROSION MACHINING

(30) Priorité: 23.07.2018 FR 1856819
(43) Date de publication de la demande: 29.01.2020
(73) Titulaire: Thermocompact, 74370 Metz Tessy (FR)
(72) Inventeur: LY, Michel, 74000 ANNECY (FR); SANCHEZ, Gérald, 74230 DINGY-SAINT-CLAIR (FR)
(74) Mandataire: Cabinet Poncet

(56) Documents cités:
- EP-A1- 0 383 370
- FR-A1- 2 527 960
- JP-A- H09 290 325
- JP-A- S61 288 931
- GONG YADONG ET AL: "Modeling and experimental study on breakdown voltage (BV) in low speed wire electrical discharge machining (LS-WEDM) of Ti-6Al-4V", THE INTERNATIONAL JOURNAL OF ADVANCED MANUFACTURING TECHNOLOGY, SPRINGER, LONDON, vol. 90, no. 5, 19 septembre 2016 (2016-09-19), pages 1277-1292, XP036227788, ISSN: 0268-3768, DOI: 10.1007/S00170-016-9416-4 [extrait le 2016-09-19]

## Description

### DOMAINE TECHNIQUE DE L'INVENTION

La présente invention concerne les procédés d'usinage par électroérosion à fil, dans lesquels un fil électrode est utilisé pour couper un matériau conducteur de l'électricité par étincelage érosif en milieu diélectrique entre le fil électrode et le matériau dans une machine d'usinage par électroérosion.

Le procédé bien connu d'usinage par électroérosion permet d'enlever de la matière sur une pièce en matériau conducteur de l'électricité, en générant des étincelles dans une zone d'étincelage entre la pièce à usiner et un fil électrode conducteur de l'électricité. Le fil électrode défile en continu au voisinage de la pièce dans le sens de la longueur du fil, tenu par des guidages, et il est déplacé progressivement dans le sens transversal en direction de la pièce, soit par translation transversale des guidages du fil, soit par translation de la pièce.

Dans la machine d'usinage par électroérosion, la zone d'étincelage entre le fil électrode et la pièce à usiner est plongée dans un fluide diélectrique approprié. Une source d'alimentation électrique est connectée entre la pièce à usiner et le fil électrode par des contacts électriques à l'écart de la zone d'étincelage. La source d'alimentation électrique permet, par l'envoi d'impulsions électriques appropriées, de générer des étincelles qui érodent progressivement la pièce et le fil électrode. Les particules détachées du fil électrode et de la pièce par les étincelles se dispersent dans le fluide diélectrique où elles sont évacuées. Le défilement longitudinal du fil électrode permet de conserver en permanence un diamètre de fil suffisant pour supporter normalement sans rupture la tension mécanique qui lui est appliquée dans la zone d'étincelage. Le déplacement relatif du fil et de la pièce dans le sens transversal permet de découper la pièce ou de traiter sa surface, le cas échéant.

Dans la machine d'usinage par électroérosion, des moyens de commande électronique pilotent les organes constitutifs de la machine pour établir ou faire varier les paramètres d'usinage que l'utilisateur choisit en fonction de la nature du fil électrode, de la nature et de la dimension de la pièce à usiner, et des particularités de l'usinage recherché. Les paramètres d'usinage comprennent généralement la fréquence des impulsions électriques, la durée du temps de pause entre deux impulsions électriques successives, la tension d'amorçage, l'énergie du courant d'étincelle, l'intensité de crête du courant d'étincelle, la durée du courant d'étincelle, les caractéristiques du flux de liquide diélectrique, la vitesse de défilement longitudinal du fil électrode, la vitesse de déplacement relatif de la pièce à usiner vis-à-vis du fil électrode.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'étincelage et limiter l'amplitude des vibrations.

La plupart des machines d'usinage par électroérosion modernes sont conçues pour utiliser des fils métalliques, généralement de 0,25 mm de diamètre, et de charge à rupture comprise entre 400 et 1 000 N/mm².

L'usinage par électroérosion étant un procédé relativement lent, il y a simultanément un besoin pour maximiser la vitesse d'usinage, notamment la vitesse d'usinage en ébauche.

On a admis jusqu'à présent que cette vitesse d'usinage dépend directement de l'énergie d'étincelage dégagée dans la zone d'étincelage entre le fil électrode et la pièce à usiner, et dépend donc de l'énergie électrique que peut conduire le fil jusqu'à la zone d'étincelage. Mais les décharges érosives dans la zone d'étincelage, et l'effet Joule produit par le courant électrique traversant le fil, tendent à échauffer le fil et à réduire simultanément sa résistance mécanique à la rupture.

Une des limites des fils pour électroérosion est ainsi qu'ils se rompent sous l'effet combiné de l'échauffement et de la tension mécanique. Cela contraint les utilisateurs à limiter la puissance d'usinage de leurs machines d'érosion, et cela limite simultanément la vitesse d'usinage.

Un problème récurrent, dans les procédés d'usinage par électroérosion à fil, est ainsi la rupture intempestive du fil électrode. S'agissant d'un phénomène qui est apparemment impossible à éliminer totalement, on a prévu, dans les machines d'usinage par électroérosion, des moyens permettant de remettre de façon automatique le fil électrode en position d'usinage après sa rupture. Cependant, après la rupture du fil électrode, pendant le temps nécessaire à sa remise en position d'usinage, le procédé d'usinage est nécessairement interrompu, ce qui réduit sensiblement la vitesse globale d'usinage de la pièce.

On a déjà cherché différents moyens pour tenter de réduire la fréquence de rupture intempestive des fils électrodes lors des procédés d'usinage par électroérosion.

Par exemple on a augmenté la résistance mécanique du fil électrode par le choix approprié d'un métal constitutif à grande résistance mécanique tel que l'acier.

Selon un autre exemple, on a proposé d'utiliser des fils pour électroérosion comportant une âme métallique et un revêtement continu de zinc, l'effet du revêtement étant de limiter l'échauffement de l'âme métallique grâce à l'énergie calorifique consommée par le zinc lors de sa vaporisation. On a tenté de réduire l'effet de l'échauffement inévitable du fil électrode par les étincelles d'usinage et l'effet Joule, en espérant ainsi éviter que cet échauffement provoque des ruptures par réduction de la résistance mécanique du fil électrode.

Selon un autre exemple, le document CH 633 739 A5 décrit un fil pour électroérosion et son procédé de fabrication, le fil ayant une âme pouvant être en cuivre ou en alliage de cuivre et de zinc, et ayant un revêtement en un alliage différent de cuivre et de zinc et recouvert d'un film en oxyde de zinc. Le document mentionne que le revêtement en alliage de cuivre et de zinc présente une structure poreuse, et que le fil présente une surface rugueuse qui augmente la surface de contact avec l'eau qui sert de liquide diélectrique d'usinage, ce qui augmente la fonction de refroidissement du fil et permet de faire passer un courant plus élevé.

Le document EP 0 930 131 B1 décrit également un fil pour électroérosion, et son procédé de fabrication, le fil ayant une âme en un premier métal comprenant du cuivre, une couche d'alliage formée sur l'âme, et une couche superficielle formée sur la couche d'alliage et constituée d'un second métal ayant une température de vaporisation plus faible que celle du premier métal. Le document enseigne l'intérêt d'obtenir en surface du fil une couche poreuse à pores ouverts qui augmentent la surface de contact entre le fil et le liquide diélectrique d'usinage, pour mieux refroidir le fil.

Selon un autre exemple, on a utilisé un fil électrode à grande conductibilité électrique pour réduire l'échauffement du fil provoqué par le courant électrique qui le traverse, en espérant ainsi éviter que cet échauffement inévitable provoque des ruptures par réduction de la résistance mécanique du fil électrode.

Selon un autre exemple, on a limité le courant électrique moyen qui traverse le fil électrode, de façon à limiter l'échauffement inévitable du fil électrode par le courant électrique qui le traverse.

Selon un autre exemple, on a tenté de réduire la fréquence des courts circuits ou amorçages rapides qui se produisent inévitablement de façon aléatoire dans la zone d'étincelage entre le fil électrode et la pièce à usiner, en favorisant l'évacuation des déchets d'usinage susceptibles de créer des amorces de claquage du milieu diélectrique, en espérant que des courts circuits moins fréquents réduisent le risque de rupture du fil électrode. Par exemple, dans le document US 5,945,010, on a proposé de recuire un laiton en phase α zingué de manière à produire une couche périphérique en laiton en phase γ, puis de tréfiler l'ébauche ainsi obtenue pour l'amener au diamètre final. Le tréfilage produit une couche superficielle de laiton en phase γ fracturée. La surface du fil pour électroérosion qui en résulte est irrégulière, et le document enseigne que cela favorise l'évacuation des déchets d'usinage.

Le document FR 2 527 960 A1 enseigne que l'une des causes de la rupture d'un fil électrode peut être attribuée au moins en partie à la présence de bulles d'air qui sont apportées par le fil électrode lui-même dans la zone d'étincelage lorsqu'il pénètre dans le liquide d'usinage. La solution décrite est alors de réduire la quantité de bulles d'air entraînées par le fil électrode, en effectuant un nettoyage mécanique préalable du fil avant son entrée dans la zone d'étincelage.

Malheureusement, malgré ces nombreuses tentatives qui ont été développées depuis de nombreuses années, aucune de ces méthodes connues n'a pour l'instant procuré un résultat suffisant, car on constate encore des ruptures aléatoires trop fréquentes du fil électrode lors des procédés d'usinage par électroérosion. En outre, la limitation du courant électrique moyen qui traverse le fil électrode, ou l'utilisation de fils électrodes à âme en acier, provoquent une réduction inévitable de la vitesse d'usinage par électroérosion, ce qui réduit fortement en pratique l'intérêt de ces méthodes.

On connaît du document JP H09 290325 un procédé et un dispositif d'usinage par électroérosion à électrode massive, dans lequel, par une source d'alimentation électrique connectée entre la pièce à usiner et l'électrode massive, on génère des impulsions électriques qui provoquent des étincelles dans la zone d'étincelage entre l'électrode massive et la pièce à usiner. Dans ce document, on utilise des ultrasons pour détecter l'état de la zone d'usinage, en particulier la distance entre les électrodes, la quantité de déchets d'usinage et de bulles gazeuses dans cette zone d'usinage. Le document enseigne que les bulles gazeuses perturbent la mesure par ultrasons des conditions d'étincelage, et qu'il faut donc en tenir compte pour apprécier correctement les conditions d'étincelage et pour modifier en conséquence les paramètres d'usinage.

### EXPOSE DE L'INVENTION

Il y a donc encore un fort intérêt à réduire la fréquence des ruptures aléatoires des fils électrodes lors des procédés d'usinage par électroérosion, mais si possible sans réduire la vitesse d'usinage.

Un problème proposé par la présente invention est ainsi d'empêcher efficacement la rupture d'un fil électrode lors d'un usinage par électroérosion, sans toutefois provoquer une réduction sensible de la vitesse globale d'usinage.

La présente invention résulte de l'observation suivante.

Les inventeurs ont constaté que, pendant un procédé d'usinage par électroérosion, il se forme des bulles de gaz dans la zone d'étincelage elle-même, à l'intérieur du liquide diélectrique. Ces bulles de gaz peuvent être recueillies au-dessus de la zone d'étincelage. La plupart du temps, dans les conditions habituelles d'usinage, ces bulles de gaz sont progressivement évacuées hors de la zone d'étincelage, notamment par échappement vers le haut ou dans le flux de liquide diélectrique évacuant les déchets d'usinage.

Le nettoyage préalable du fil électrode avant sa pénétration dans le liquide diélectrique, comme enseigné par le document FR 2 527 960 A1, n'empêche pas la formation des bulles de gaz dans la zone d'étincelage elle-même, et il est vraisemblable que cela constitue la raison pour laquelle la solution proposée par ce document ne réduit pas suffisamment les risques de rupture du fil électrode.

Partant de ces constatations, l'idée qui est à la base de la présente invention est que les ruptures aléatoires du fil électrode seraient essentiellement dues à la formation de bulles de gaz dans la zone d'étincelage lorsque, dans certaines conditions d'usinage, celles-ci se forment en trop grande quantité et s'agglomèrent à la surface du fil électrode autour d'au moins un tronçon de sa longueur utile dans la zone d'étincelage : les bulles de gaz en surface du fil électrode, lorsqu'elles sont agglomérées en trop grande quantité sur une certaine longueur du fil électrode, sont susceptibles de provoquer son échauffement localisé intense et sa rupture.

Une explication semble être que les bulles de gaz agglomérées isolent thermiquement le fil électrode vis-à-vis du liquide diélectrique et empêchent ainsi son refroidissement localisé. Une autre explication semble être que les bulles agglomérées favorisent le déclenchement d'étincelles dans la zone occupée par les bulles, et augmentent ainsi l'échauffement localisé du fil électrode. Les deux effets peuvent se cumuler.

Ainsi, pour éviter la rupture du fil électrode lors d'un usinage par électroérosion, sans toutefois provoquer une réduction sensible de la vitesse globale d'usinage, la présente invention propose un procédé d'usinage d'une pièce par électroérosion à fil électrode tel que défini dans la revendication 1.

En particulier, on évalue indirectement la quantité de bulles de gaz présente dans la zone d'étincelage entre le fil électrode et la pièce à usiner par une mesure de l'impédance électrique entre le fil électrode et la pièce à usiner pendant l'intervalle de temps entre deux impulsions successives de courant d'étincelle.

Les paramètres d'usinage mentionnés dans l'énoncé de la solution sont pris parmi les paramètres d'usinage habituels des machines d'électroérosion tels que relatés au début de la présente description en relation avec l'état de la technique.

On a pu constater que le fait de maintenir la quantité de bulles de gaz en dessous d'un seuil de tolérance permet de réduire très sensiblement le risque de rupture du fil électrode en cours d'usinage par électroérosion.

En pratique, on mesure la valeur de l'élément capacitif de l'impédance électrique entre le fil électrode et la pièce à usiner pendant l'intervalle de temps entre deux impulsions successives de courant d'étincelle. On évite ainsi de perturber les étincelles érosives, de sorte que l'efficacité d'usinage est maintenue.

Selon une première possibilité, on déduit la valeur de l'élément capacitif de l'impédance électrique entre le fil électrode et la pièce à usiner à partir d'une mesure de la vitesse de croissance de la tension électrique entre le fil électrode et la pièce à usiner lors de l'application d'une impulsion de tension électrique d'amorçage avant que celle-ci provoque une étincelle.

Selon une seconde possibilité, on évalue indirectement la quantité de bulles de gaz présente dans la zone d'étincelage entre le fil électrode et la pièce à usiner en injectant, entre le fil électrode et la pièce à usiner, un courant électrique haute fréquence pendant le temps de pause entre deux impulsions électriques successives, et en mesurant l'impédance du circuit électrique à cette haute fréquence pour en déduire la valeur de l'élément capacitif de l'impédance électrique entre le fil électrode et la pièce à usiner.

Selon un premier mode de réalisation, le paramètre d'usinage sur lequel on agit pour réduire le risque de rupture du fil électrode est l'intensité de crête du courant d'étincelle. Dans ce cas, on réduit l'intensité de crête du courant d'étincelle lorsque ladite quantité évaluée de bulles de gaz augmente, et on augmente l'intensité de crête du courant d'étincelle après une durée de maintien prédéterminée ou, de préférence, lorsque ladite quantité évaluée de bulles de gaz diminue.

Dans ce premier mode de réalisation, on peut avantageusement réduire l'intensité de crête du courant d'étincelle lorsque ladite quantité évaluée de bulles de gaz a augmenté au-delà d'un seuil supérieur, et, de préférence, on peut augmenter à nouveau l'intensité de crête du courant d'étincelle lorsque ladite quantité évaluée de bulles de gaz a diminué en dessous d'un seuil inférieur.

En pratique, selon tel un premier mode de réalisation simplifié :
- on compare ladite quantité évaluée de bulles de gaz avec au moins un seuil de quantité prédéterminé,
- lorsque ladite quantité évaluée de bulles de gaz atteint ou dépasse ledit au moins un seuil de quantité prédéterminé, on réduit l'intensité de crête du courant d'étincelle pendant une durée de maintien prédéterminée.

Selon un second mode de réalisation, le paramètre d'usinage sur lequel on agit pour réduire le risque de rupture du fil électrode est le temps de pause entre lesdites impulsions électriques successives. Dans ce cas, on augmente le temps de pause entre lesdites impulsions électriques successives lorsque ladite quantité évaluée de bulles de gaz augmente, et on réduit le temps de pause entre lesdites impulsions électriques successives après une durée de maintien prédéterminée ou, de préférence, lorsque ladite quantité évaluée de bulles de gaz diminue.

Dans ce second mode de réalisation, on peut avantageusement augmenter le temps de pause entre lesdites impulsions électriques successives lorsque ladite quantité évaluée de bulles de gaz a augmenté au-delà d'un seuil supérieur, et, de préférence, on peut réduire à nouveau le temps de pause entre lesdites impulsions électriques successives lorsque ladite quantité évaluée de bulles de gaz a diminué en dessous d'un seuil inférieur.

En pratique, selon un second mode de réalisation simplifié :
- on compare ladite quantité évaluée de bulles de gaz avec au moins un seuil de quantité prédéterminé,
- lorsque ladite quantité évaluée de bulles de gaz atteint ou dépasse ledit au moins un seuil de quantité prédéterminé, on augmente le temps de pause entre lesdites impulsions électriques successives pendant une durée de maintien prédéterminée.

Dans le même but et selon un autre aspect, la présente invention propose un dispositif d'usinage d'une pièce par électroérosion à fil électrode, comprenant :
- des moyens pour tendre le fil électrode et l'entraîner en translation longitudinale, à proximité de ladite pièce à usiner, dans une zone d'étincelage,
- des moyens pour faire circuler un flux de liquide diélectrique dans la zone d'étincelage entre le fil électrode et la pièce à usiner,
- une source d'alimentation électrique, connectée entre la pièce à usiner et le fil électrode, apte à générer des impulsions électriques pouvant provoquer des étincelles dans la zone d'étincelage entre le fil électrode et la pièce à usiner,
- des moyens de commande, pilotant ladite source d'alimentation électrique, les moyens pour faire circuler le flux de liquide diélectrique, et les autres moyens d'établissement ou de changement des paramètres d'usinage, en déterminant les caractéristiques desdites impulsions électriques, les caractéristiques du flux de liquide diélectrique, et les autres paramètres d'usinage,
- des moyens pour évaluer la quantité de bulles de gaz présente dans la zone d'étincelage entre le fil électrode et la pièce à usiner, et pour fournir aux moyens de commande un signal représentatif de ladite quantité évaluée de bulles de gaz, les moyens pour évaluer la quantité de bulles de gaz présente dans la zone d'étincelage entre le fil électrode et la pièce à usiner comprenant des moyens de mesure de la composante capacitive de l'impédance du circuit électrique constitué par la zone d'étincelage entre le fil électrode et la pièce à usiner.
- dans les moyens de commande, des moyens d'adaptation pour modifier l'un au moins des paramètres d'usinage, en fonction dudit signal représentatif de ladite quantité évaluée de bulles de gaz présente dans la zone d'étincelage entre le fil électrode et la pièce à usiner, de façon à maintenir ou ramener la valeur dudit signal dans une plage appropriée de valeurs de signal.

Selon une première possibilité, lesdits moyens de mesure de la composante capacitive d'impédance effectuent une mesure de la vitesse de croissance de la tension électrique d'amorçage entre le fil électrode et la pièce à usiner.

Selon une seconde possibilité, lesdits moyens de mesure de la composante capacitive d'impédance comprennent :
- un générateur haute fréquence apte à injecter, entre le fil électrode et la pièce à usiner, un courant électrique haute fréquence,
- des moyens de mesure de l'impédance complexe du circuit électrique dans lequel ledit générateur haute fréquence injecte ledit courant électrique haute fréquence,
- des moyens de calcul pour extraire de ladite impédance complexe mesurée la valeur de la composante capacitive d'impédance du circuit électrique constitué par la zone d'étincelage entre le fil électrode et la pièce à usiner.

Selon un premier mode de réalisation, lesdits moyens d'adaptation peuvent comprendre :
- un comparateur pour comparer à au moins un seuil de signal prédéterminé ledit signal représentatif de ladite quantité de bulles de gaz présente dans la zone d'étincelage entre le fil électrode et la pièce à usiner,
- un programme de commande enregistré pour piloter la source d'alimentation électrique de façon à réduire l'intensité de crête du courant d'étincelle lorsque ledit signal représentatif de ladite quantité de bulles de gaz présente dans la zone d'étincelage atteint ou dépasse ledit au moins un seuil de signal.

Selon un second mode de réalisation, lesdits moyens d'adaptation peuvent comprendre :
- un comparateur pour comparer à au moins un seuil de signal prédéterminé ledit signal représentatif de ladite quantité de bulles de gaz présente dans la zone d'étincelage entre le fil électrode et la pièce à usiner,
- un programme de commande enregistré pour piloter la source d'alimentation électrique de façon à augmenter le temps de pause entre lesdites impulsions électriques successives lorsque ledit signal représentatif de ladite quantité de bulles de gaz présente dans la zone d'étincelage atteint ou dépasse ledit au moins un seuil de signal.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique d'une machine d'électroérosion à fil électrode incorporant un dispositif selon la présente invention ;
- la figure 2 est une vue schématique en perspective illustrant, à plus grande échelle, une pièce à usiner en cours d'usinage par le fil électrode ;
- la figure 3 est une vue schématique de face de l'ensemble de la figure 2 ;
- la figure 4 est une vue schématique de dessus de l'ensemble de la figure 2 ;
- la figure 5 est une vue schématique de face en coupe illustrant la zone d'étincelage sans présence de bulles de gaz ;
- la figure 6 est une vue schématique de face en coupe illustrant la zone d'étincelage en présence d'une bulle de gaz ;
- la figure 7 est une vue schématique illustrant la forme d'onde de la tension électrique entre le fil électrode et la pièce à usiner pendant une étape d'étincelage érosif ; et
- la figure 8 est une vue schématique illustrant la forme d'onde du courant électrique parcourant le fil électrode, le diélectrique et la pièce à usiner pendant une étape d'étincelage érosif.

### DESCRIPTION DES MODES DE REALISATION PREFERES

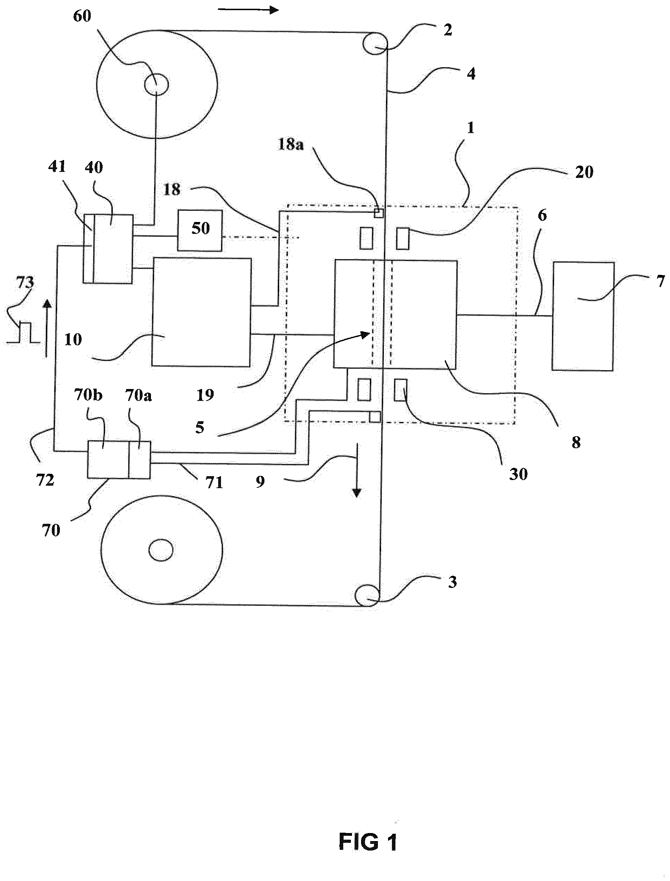

On considère tout d'abord les figures 1 à 6, qui illustrent le procédé et le dispositif selon la présente invention permettant l'usinage par étincelage érosif au moyen d'un fil électrode 4 en réduisant les risques de rupture intempestive du fil électrode 4 sans réduire sensiblement la vitesse d'électroérosion d'une pièce à usiner 8.

La machine d'électroérosion telle qu'illustrée sur la figure 1 comprend essentiellement une enceinte 1 d'usinage contenant un flux d'un diélectrique tel que de l'eau déionisée, des moyens tels que des poulies 2 et 3 et des guides fils 20 et 30 pour tenir un fil électrode 4 et le tendre dans une zone d'étincelage 5 à l'intérieur de l'enceinte 1, un support de pièce 6 et des moyens de déplacement 7 pour déplacer le support de pièce 6 par rapport au fil électrode 4 dans la zone d'étincelage 5. La pièce à usiner 8, tenue par le support de pièce 6, est placée dans la zone d'étincelage 5. Les guides fils 20, 30 sont de part et d'autre de la pièce à usiner 8, et guident le fil électrode 4 avec précision. Ils ont pour cela une position proche de la pièce à usiner 8, et leur diamètre est peu supérieur à celui du fil électrode 4, par exemple un diamètre de 254 µm pour un fil électrode 4 de 250 µm. Le fil électrode 4 défile longitudinalement comme indiqué par la flèche 9 dans la zone d'étincelage 5 au regard de la pièce à usiner 8. Une source d'alimentation électrique 10, connectée électriquement d'une part au fil électrode 4 par une ligne 18 et au moins un contact 18a qui touche le fil électrode 4 lors de son passage dans le diélectrique de l'enceinte 1 entre la poulie 2 et le guide fil 20, et d'autre part à la pièce à usiner 8 par une ligne 19, génère dans la zone d'étincelage 5 une énergie électrique appropriée pour faire apparaître des étincelles ou arcs électriques entre la pièce à usiner 8 et le fil électrode 4.

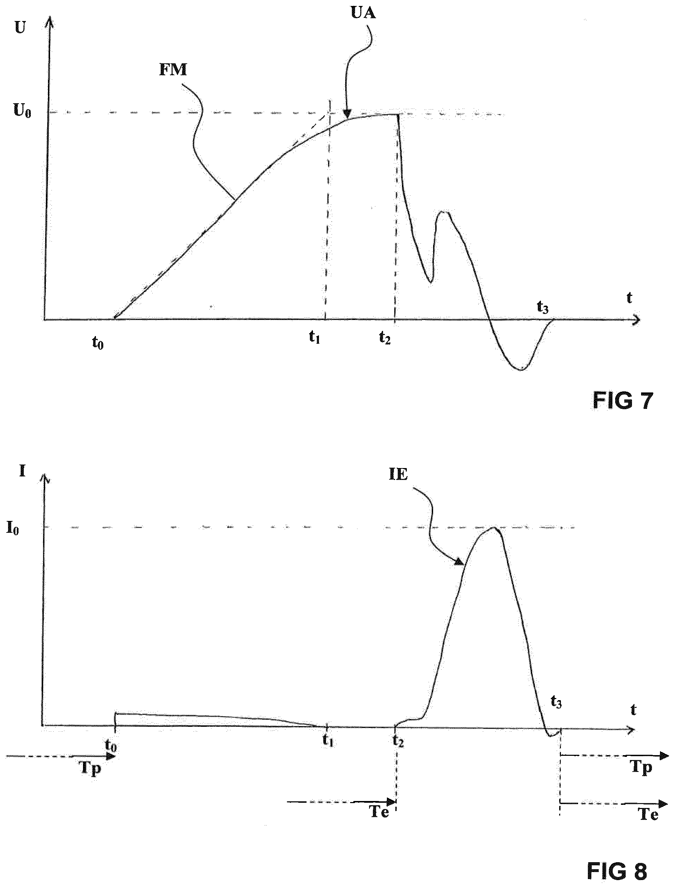

On considère maintenant les figures 7 et 8 qui illustrent respectivement, en fonction du temps t, la forme d'onde de la tension U et la forme d'onde du courant I pendant une impulsion électrique d'usinage par électroérosion. L'impulsion électrique comprend tout d'abord, entre les instants t₀ et t₂, une impulsion de tension d'amorçage UA, puis, entre les instants t₂ et t₃, une impulsion de courant d'étincelle IE.

Sur la figure 7, la source d'alimentation électrique 10 génère une impulsion de tension d'amorçage UA dont le front de montée FM s'étend de l'instant initial t₀ à l'instant de fin d'établissement t₁. L'établissement de la tension d'amorçage maximale U₀ entre le fil électrode 4 et la pièce à usiner 8 dans la zone d'étincelage 5 n'est pas instantané, mais se produit selon un front de montée FM exponentiel car il s'agit de l'établissement d'une tension aux bornes d'un circuit électrique constitué par la zone d'étincelage 5 présentant essentiellement les propriétés d'un condensateur électrique : en l'absence d'étincelles, le liquide diélectrique présent dans la zone d'étincelage 5 isole les éléments métalliques constitués par le fil électrode 4 et la pièce à usiner 8, et l'ensemble constitue un élément capacitif.

Après l'instant t₁ et jusqu'à un instant t₂ la source d'alimentation électrique 10 maintient la tension électrique U₀ en attendant le claquage du diélectrique.

À l'instant t₂ se produit le claquage du diélectrique, et la tension électrique U entre le fil électrode 4 et la pièce à usiner 8 chute brusquement, et reste inférieure jusqu'à l'instant t₃.

Sur la figure 8, illustrant la forme d'onde du courant électrique I débité par la source d'alimentation électrique 10, le courant électrique I reste faible entre les instants t₀ et t₁, et il reste quasiment nul entre les instants t₁ et t₂. Après l'instant de claquage t₂, la source d'alimentation électrique 10 génère le courant d'étincelle IE sous forme d'une impulsion de courant ayant une amplitude ou intensité de crête I₀ et qui se termine à l'instant t₃. C'est cette impulsion de courant, ou courant d'étincelle IE, qui alimente et entretient l'étincelle d'électroérosion.

Après l'instant t₃, la source d'alimentation électrique 10 attend un temps de pause Tp, et le cycle recommence avec une nouvelle impulsion de tension.

On comprend qu'une étincelle érosive se produit à chaque impulsion de courant d'étincelle IE. On a illustré, sur la figure 8, l'intervalle de temps Te entre deux étincelles successives, c'est-à-dire entre deux impulsions successives de courant d'étincelle IE.

La source d'alimentation électrique 10 peut agir sur la puissance d'usinage, en modulant notamment l'amplitude ou intensité de crête l₀ du courant d'étincelle IE, la durée d'impulsion du courant d'étincelle IE entre les instants t₂ et t₃, et le temps de pause Tp entre deux impulsions électriques UA-IE successives.

On considère à nouveau la figure 1. La machine d'électroérosion comprend des moyens de commande 40 pour piloter les différents organes de la machine d'électroérosion selon des paramètres d'usinage appropriés. L'utilisateur peut choisir certains paramètres d'usinage notamment en fonction de la nature et de la forme de la pièce à usiner 8, de la constitution du fil électrode 4, du type d'usinage (ébauche, finition) à réaliser.

Ainsi, les moyens de commande 40 pilotent la source d'alimentation électrique 10 en adaptant notamment la valeur, la forme d'onde et les autres paramètres de l'énergie électrique générée dans la zone d'étincelage 5 par la source d'alimentation électrique 10.

Les moyens de commande 40 pilotent également les autres organes de la machine d'électroérosion, notamment les moyens de circulation 50 pour faire circuler le flux de liquide diélectrique dans la zone d'étincelage 5, les moyens d'entraînement en translation 60 tels qu'un moteur électrique pour entraîner en translation longitudinale illustrée par la flèche 9 le fil électrode 4 et pour adapter sa vitesse de défilement dans la zone d'étincelage 5, et les moyens de déplacement 7 assurant le déplacement de la pièce à usiner 8 par rapport au fil électrode 4 en fonction des étapes d'usinage souhaitées.

Dans le mode de réalisation illustré, la machine d'électroérosion comprend en outre des moyens de mesure 70, dont les lignes d'entrée-sortie 71 sont connectées électriquement respectivement à la pièce à usiner 8 et au fil électrode 4, et qui sont aptes à évaluer la quantité de bulles de gaz présente dans la zone d'étincelage 5 entre le fil électrode 4 et la pièce à usiner 8. Les moyens de mesure 70 fournissent aux moyens de commande 40, par la ligne de transmission 72, un signal 73 représentatif de ladite quantité évaluée de bulles de gaz.

Selon un premier mode de réalisation, les moyens de mesure 70 peuvent comprendre un générateur haute fréquence 70a apte à injecter par les lignes d'entrée-sortie 71 un courant électrique haute fréquence entre le fil électrode 4 et la pièce à usiner 8, et des moyens de mesure 70b pour mesurer l'élément capacitif de l'impédance électrique complexe du circuit électrique aux bornes des lignes d'entrée-sortie 71 à cette haute fréquence et pour en déduire le signal 73 représentatif de la quantité évaluée de bulles de gaz.

En pratique, on pourra utiliser tout circuit constitutif de capacimètre capable de mesurer rapidement des capacités de l'ordre de 5 à 100 pF pendant un temps de mesure inférieur au temps de pause Tp habituel (d'environ 0.5 ms) entre deux impulsions électriques successives. Pendant ce temps de pause Tp, l'impédance de sortie de la source d'alimentation électrique 10 doit être très élevée, de type circuit ouvert, pour ne pas perturber la mesure de capacité.

En alternative, selon un second mode de réalisation, les moyens de mesure 70 peuvent recevoir, par les lignes d'entrée-sortie 71, la forme d'onde de la tension électrique présente entre le fil électrode 4 et la pièce à usiner 8 pendant l'impulsion de tension d'amorçage UA, et peuvent en déduire, en mesurant la vitesse de croissance de la tension électrique d'amorçage U entre le fil électrode 4 et la pièce à usiner 8 lors de l'application d'une impulsion de tension électrique d'amorçage UA par la source d'alimentation électrique 10, la valeur de l'élément capacitif de l'impédance électrique présente entre le fil électrode 4 et la pièce à usiner 8, pour en déduire le signal 73 représentatif de la quantité évaluée de bulles de gaz.

Dans les moyens de commande 40, des moyens d'adaptation 41 sont programmés pour modifier les paramètres d'usinage en fonction du signal 73 représentatif de ladite quantité évaluée de bulles de gaz, de façon à maintenir ou ramener la valeur dudit signal 73 dans une plage appropriée de valeurs de signal.

Les limites de la plage appropriée de valeurs de signal dépendent notamment de la nature et de la forme de la pièce à usiner 8, de la constitution du fil électrode 4, et du type d'usinage à réaliser. Ces limites doivent donc être déterminées par l'utilisateur, par des essais d'usinage de routine au cours desquels auront été constatées une vitesse d'usinage satisfaisante et une réduction sensible de la fréquence des ruptures éventuelles de fil électrode.

En pratique, on pourra choisir une plage de valeurs de signal définie par une seule limite supérieure, les moyens d'adaptation 41 étant alors programmés pour réduire l'énergie d'étincelage pendant un temps d'attente prédéterminé permettant l'évacuation suffisante des bulles de gaz, et pour ramener ensuite l'énergie d'étincelage à son niveau antérieur à l'issue du temps d'attente prédéterminé.

Toutefois, une plage de valeurs de signal définie par une limite supérieure et une limite inférieure permettra d'optimiser la vitesse d'électroérosion.

Les moyens de commande 40 et les moyens d'adaptation 41 peuvent être réalisés sous forme d'un microprocesseur ou d'un microcontrôleur associé à un programme approprié. En pratique, les organes de commande habituels des machines d'électroérosion peuvent être eux-mêmes programmés pour remplir les fonctions décrites ci-dessus et pour piloter en conséquence les organes constitutifs de la machine d'électroérosion selon le procédé de la présente invention.

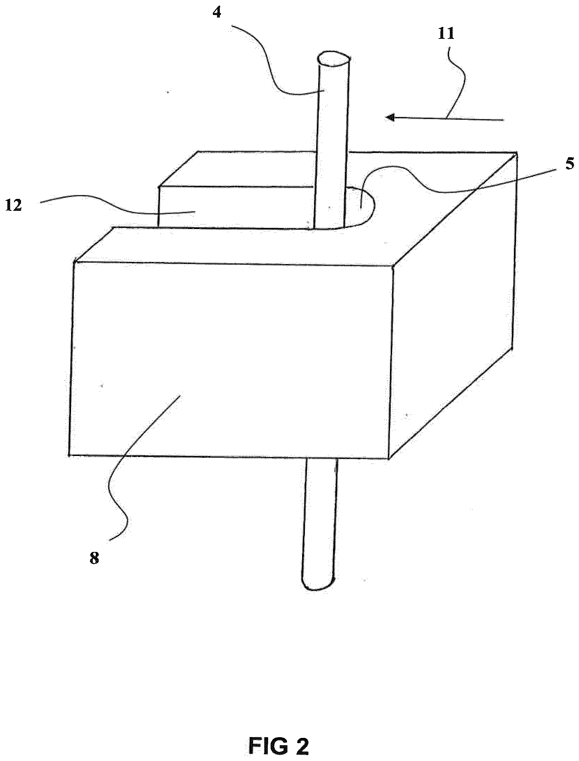

Comme on le voit sur la figure 2, par déplacement de la pièce à usiner dans une direction transversale selon la flèche 11, l'étincelage érosif produit progressivement la pénétration du fil électrode 4 dans la masse de la pièce à usiner 8 qui est conductrice de l'électricité, et produit une fente 12. Dans l'exemple illustré, la découpe est une fente 12 rectiligne, qui occupe toute la hauteur H de la pièce à usiner 8. Par un déplacement 11 non linéaire de la pièce à usiner 8, la découpe peut être non linéaire.

Le déplacement de la pièce à usiner 8 doit suivre l'érosion produite par les étincelles, sans excès. Une vitesse trop lente réduit la vitesse d'usinage. Une vitesse trop rapide produit le contact du fil électrode 4 et de la pièce à usiner 8, et l'arrêt de la machine par suite du court-circuit.

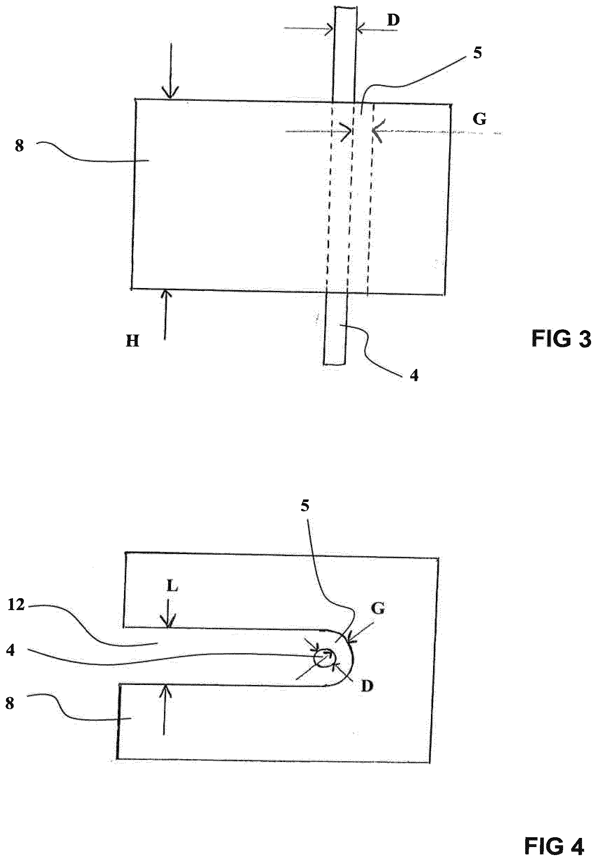

Sur les figures 3 et 4, on a illustré plus en détail la zone d'étincelage 5 dans la fente 12. En adaptant la vitesse de déplacement de la pièce à usiner 8, on fait en sorte que l'espacement G entre la surface extérieure du fil électrode 4 et la surface intérieure de la fente 12 soit sensiblement constant. Ainsi, la zone d'étincelage 5 se situe entre le fond demi cylindrique de la fente 12 et le demi-cylindre formé par la demi-surface du fil électrode 4 orientée vers le fond demi cylindrique de la fente 12. La largeur L de la fente 12 est égale au diamètre D du fil électrode augmenté de deux fois l'espacement G.

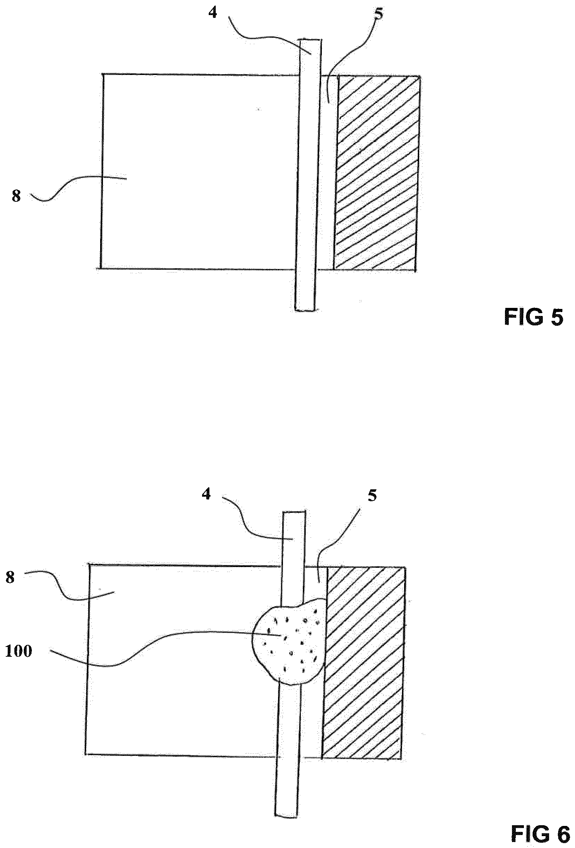

Sur les figures 5 et 6, on a illustré, en coupe selon le plan médian de la fente 12, la zone d'étincelage 5 entre le fil électrode 4 et la pièce à usiner 8. Sur la figure 5, la zone d'étincelage 5 est illustrée dans un état « normal » dans lequel aucune bulle de gaz ne s'est agglutinée autour du fil électrode 4. Par contre, sur la figure 6, la zone d'étincelage 5 est illustrée dans un état de « risques de rupture » dans lequel une bulle de gaz 100 s'est agglutinée autour du fil électrode 4. On comprend que, dans le tronçon de longueur occupé par la bulle de gaz 100, le fil électrode 4 est isolé thermiquement du liquide diélectrique emplissant le reste de la zone d'étincelage 5. Il en résulte que la température dudit tronçon de longueur de fil électrode augmente rapidement et provoque une augmentation du risque de rupture du fil électrode 4 dans ledit tronçon de longueur occupé par la bulle de gaz 100.

La présente invention, en détectant la présence d'une quantité anormalement élevée de bulles de gaz dans la zone d'étincelage 5, et en adaptant en conséquence et momentanément les paramètres d'usinage jusqu'à ce que cette quantité de bulles de gaz revienne à un niveau admissible, vise à éviter l'apparition d'une telle bulle de gaz 100 de grand volume et agglutinée sur le fil électrode 4. Il en résulte une réduction très sensible du risque de rupture du fil électrode 4.

Une simulation montre que, dans le cas d'un fil électrode 4 dont le diamètre D est de 250 µm, d'une pièce à usiner dont la hauteur H est de 0.1 m, et d'un espacement G habituel de 40 µm, la valeur de l'élément capacitif de l'impédance électrique présente dans la zone d'étincelage 5 est d'environ 800 pF lorsque le liquide diélectrique est l'eau déionisée, étant observé que la permittivité électrique de l'eau liquide est d'environ 81.

Par contre, selon cette même simulation, à supposer qu'une bulle de gaz 100 occupe toute la zone d'étincelage 5, la valeur de l'élément capacitif de l'impédance électrique présente dans la zone d'étincelage 5 serait d'environ 10 pF, étant observé que la permittivité électrique des gaz de bulle est d'environ 1.

On comprend que la présence de bulles de gaz occupant une partie seulement de la zone d'étincelage 5 conduit à une valeur intermédiaire de l'élément capacitif, valeur comprise entre 800 pF et 10 pF lorsque le liquide diélectrique utilisé est l'eau déionisée.

On constate donc qu'il est possible d'évaluer la quantité de bulles de gaz présente dans la zone d'étincelage 5 en mesurant la valeur de l'élément capacitif d'impédance électrique présent dans la zone d'étincelage 5. Lorsque cette valeur diminue, cela indique une augmentation de la présence de bulles de gaz, et donc une augmentation du risque de présence de bulles de gaz isolantes telles que la bulle de gaz 100 illustrée sur la figure 6.

On notera que, pour utiliser cette méthode d'évaluation de la quantité de bulles de gaz, il est plus avantageux d'utiliser l'eau déionisée plutôt qu'un diélectrique à base d'huile, car un diélectrique à base d'huile présente une permittivité proche de 2.2, c'est-à-dire plus proche de celle des gaz formant les bulles de gaz, ce qui réduit la sensibilité de la détection par mesure de capacité.

La mesure de l'élément capacitif de l'impédance électrique complexe présente entre le fil électrode 4 et la pièce à usiner 8 doit de préférence être réalisée sans perturber le processus d'électroérosion. En pratique, dans le premier mode de réalisation à injection d'une haute fréquence par les moyens de mesure, l'étape de mesure devra être réalisée pendant le temps de pause Tp. Dans le second mode de réalisation à mesure de la vitesse de croissance de la tension d'amorçage, l'étape de mesure sera effectuée pendant l'intervalle de temps entre les instants t₀ et t₁, c'est-à-dire pendant le front de montée FM de l'impulsion de tension d'amorçage, sans modifier la valeur et la forme d'onde de cette impulsion.

La présente invention n'est pas limitée aux modes de réalisation qui ont été explicitement décrits, mais elle en inclut les diverses variantes et généralisations contenues dans le domaine des revendications ci-après.

## Revendications

1. - Procédé d'usinage d'une pièce (8) par électroérosion à fil électrode (4), dans lequel :
- on tend le fil électrode (4) et on l'entraîne en translation longitudinale (9), à proximité de ladite pièce à usiner (8), dans une zone d'étincelage (5) dans laquelle se déplace un flux de liquide diélectrique,
- par une source d'alimentation électrique (10) connectée entre la pièce à usiner (8) et le fil électrode (4), on génère des impulsions électriques (UA-IE) qui provoquent des étincelles dans la zone d'étincelage (5) entre le fil électrode (4) et la pièce à usiner (8),
- on évalue indirectement la quantité de bulles de gaz présente dans la zone d'étincelage (5) entre le fil électrode (4) et la pièce à usiner (8) par une mesure de l'impédance électrique entre le fil électrode (4) et la pièce à usiner (8) pendant l'intervalle de temps (Te) entre deux impulsions successives de courant d'étincelle (IE),
- on modifie, en fonction de ladite quantité évaluée de bulles de gaz, au moins l'un des paramètres d'usinage de façon à maintenir ou ramener ladite quantité évaluée de bulles dans une plage appropriée de valeurs.

2. - Procédé d'usinage selon la revendication 1, **caractérisé en ce qu'**on mesure la valeur de l'élément capacitif de l'impédance électrique entre le fil électrode (4) et la pièce à usiner (8) pendant l'intervalle de temps (Te) entre deux impulsions successives de courant d'étincelle (IE).

3. - Procédé d'usinage selon la revendication 2, **caractérisé en ce qu'**on déduit la valeur de l'élément capacitif de l'impédance électrique entre le fil électrode (4) et la pièce à usiner (8) à partir d'une mesure de la vitesse de croissance de la tension électrique (U) entre le fil électrode (4) et la pièce à usiner (8) lors de l'application d'une impulsion de tension électrique d'amorçage (UA) avant que celle-ci provoque une étincelle.

4. - Procédé d'usinage selon la revendication 2, **caractérisé en ce qu'**on injecte, entre le fil électrode (4) et la pièce à usiner (8), un courant électrique haute fréquence pendant le temps de pause (Tp) entre deux impulsions électriques (UA-IE) successives, et on mesure l'impédance du circuit électrique à cette haute fréquence pour en déduire la valeur de l'élément capacitif de l'impédance électrique entre le fil électrode (4) et la pièce à usiner (8).

5. - Procédé d'usinage selon l'une quelconque des revendications 1 à 4, **caractérisé en ce qu'**on réduit l'intensité de crête (I₀) du courant d'étincelle (IE) lorsque ladite quantité évaluée de bulles de gaz augmente, et on augmente l'intensité de crête (I₀) du courant d'étincelle (IE) lorsque ladite quantité évaluée de bulles de gaz diminue.

6. - Procédé d'usinage selon l'une quelconque des revendications 1 à 5, **caractérisé en ce que** :
- on compare ladite quantité évaluée de bulles de gaz avec au moins un seuil de quantité prédéterminé,
- lorsque ladite quantité évaluée de bulles de gaz atteint ou dépasse ledit au moins un seuil de quantité prédéterminé, on réduit l'intensité de crête (I₀) du courant d'étincelle pendant une durée de maintien prédéterminée.

7. - Procédé d'usinage selon l'une quelconque des revendications 1 à 4, **caractérisé en ce qu'**on augmente le temps de pause (Tp) entre lesdites impulsions électriques (UA-IE) successives lorsque ladite quantité évaluée de bulles de gaz augmente, et on réduit le temps de pause (Tp) entre lesdites impulsions électriques (UA-IE) successives lorsque ladite quantité évaluée de bulles de gaz diminue.

8. - Procédé d'usinage selon la revendication 7, **caractérisé en ce que** :
- on compare ladite quantité évaluée de bulles de gaz avec au moins un seuil de quantité prédéterminé,
- lorsque ladite quantité évaluée de bulles de gaz atteint ou dépasse ledit au moins un seuil de quantité prédéterminé, on augmente le temps de pause (Tp) entre lesdites impulsions électriques (UA-IE) successives pendant une durée de maintien prédéterminée.

9. - Dispositif d'usinage d'une pièce par électroérosion à fil électrode, comprenant :
- des moyens (2, 3, 20, 30, 60), pour tendre le fil électrode (4) et l'entraîner en translation longitudinale (9), à proximité de ladite pièce à usiner (8), dans une zone d'étincelage (5),
- des moyens pour faire circuler un flux de liquide diélectrique dans la zone d'étincelage (5) entre le fil électrode (4) et la pièce à usiner (8),
- une source d'alimentation électrique (10), connectée électriquement entre la pièce à usiner (8) et le fil électrode (4), apte à générer des impulsions électriques (UA, IE) pouvant provoquer des étincelles dans la zone d'étincelage (5) entre le fil électrode (4) et la pièce à usiner (8),
- des moyens de commande (40), pilotant ladite source d'alimentation électrique (10), les moyens (50) pour faire circuler le flux de liquide diélectrique, et les autres moyens d'établissement ou de changement des paramètres d'usinage en déterminant les caractéristiques desdites impulsions électriques (UA, IE), les caractéristiques du flux de liquide diélectrique, et les autres paramètres d'usinage,
- des moyens de mesure (70) pour évaluer la quantité de bulles de gaz présente dans la zone d'étincelage (5) entre le fil électrode (4) et la pièce à usiner (8), et pour fournir aux moyens de commande (40) un signal (73) représentatif de ladite quantité évaluée de bulles de gaz, lesdits moyens de mesure (70) comprenant des moyens de mesure de la composante capacitive de l'impédance du circuit électrique constitué par la zone d'étincelage (5) entre le fil électrode (4) et la pièce à usiner (8),
- dans les moyens de commande (40), des moyens d'adaptation (41) pour modifier l'un au moins des paramètres d'usinage, en fonction dudit signal (73) représentatif de ladite quantité évaluée de bulles de gaz présente dans la zone d'étincelage (5) entre le fil électrode (4) et la pièce à usiner (8), de façon à maintenir ou ramener la valeur dudit signal (73) dans une plage appropriée de valeurs de signal.

10. - Dispositif d'usinage selon la revendication 9, **caractérisé en ce que** lesdits moyens de mesure de la composante capacitive d'impédance effectuent une mesure de la vitesse de croissance de la tension électrique d'amorçage (U) entre le fil électrode (4) et la pièce à usiner (8).

11. - Dispositif d'usinage selon la revendication 9, **caractérisé en ce que** lesdits moyens de mesure de la composante capacitive d'impédance comprennent
- un générateur haute fréquence apte à injecter, entre le fil électrode (4) et la pièce à usiner (8), un courant électrique haute fréquence,
- des moyens de mesure de l'impédance complexe du circuit électrique dans lequel ledit générateur haute fréquence injecte ledit courant électrique haute fréquence,
- des moyens de calcul pour extraire de ladite impédance complexe mesurée la valeur de la composante capacitive d'impédance du circuit électrique constitué par la zone d'étincelage (5) entre le fil électrode (4) et la pièce à usiner (8).

12. - Dispositif d'usinage selon l'une quelconque des revendications 9 à 11, **caractérisé en ce que** lesdits moyens d'adaptation (41) comprennent :
- un comparateur pour comparer à au moins un seuil de signal prédéterminé ledit signal (73) représentatif de ladite quantité de bulles de gaz présente dans la zone d'étincelage (5) entre le fil électrode (4) et la pièce à usiner (8),
- un programme de commande enregistré pour piloter la source d'alimentation électrique (10) de façon à réduire l'intensité de crête (I₀) du courant d'étincelle (IE) lorsque ledit signal (73) représentatif de ladite quantité de bulles de gaz présente dans la zone d'étincelage (5) atteint ou dépasse ledit au moins un seuil de signal.

13. - Dispositif d'usinage selon l'une quelconque des revendications 9 à 11, **caractérisé en ce que** lesdits moyens d'adaptation (41) comprennent :
- un comparateur pour comparer à au moins un seuil de signal prédéterminé ledit signal (73) représentatif de ladite quantité de bulles de gaz présente dans la zone d'étincelage (5) entre le fil électrode (4) et la pièce à usiner (8),
- un programme de commande enregistré pour piloter la source d'alimentation électrique (10) de façon à augmenter le temps de pause (Tp) entre lesdites impulsions électriques successives lorsque ledit signal (73) représentatif de ladite quantité de bulles de gaz présente dans la zone d'étincelage (5) atteint ou dépasse ledit au moins un seuil de signal.

## Patentansprüche

1. Verfahren zur Bearbeitung eines Werkstücks (8) durch Funkenerosion mit einem Elektrodendraht (4), bei dem:
- der Elektrodendraht (4) gestreckt und seiner Längsrichtung (9) in der Nähe des besagten Werkstücks (8) in einer Funkenzone (5) angetrieben wird, in der sich ein Fluss aus dielektrischer Flüssigkeit bewegt,
- durch eine zwischen dem Werkstück (8) und dem Elektrodendraht (4) verbundene elektrische Versorgungsquelle (10) elektrische Impulse (UA-IE) erzeugt werden, die in der Funkenzone (5) zwischen dem Elektrodendraht (4) und dem Werkstück (8) Funken verursachen,
- die Menge der in der Funkenzone (5) zwischen dem Elektrodendraht (4) und dem Werkstück (8) vorhandenen Gasblasen indirekt durch Messen der Impedanz zwischen dem Elektrodendraht (4) und dem Werkstück (8) während des Zeitintervalls (Te) zwischen zwei aufeinanderfolgenden Impulsen Funkenstroms (IE) evaluiert wird,
- mindestens einer der Bearbeitungsparameter als Funktion besagter evaluierten Menge an Gasblasen derart modifiziert wird, dass besagte evaluierte Menge an Blasen innerhalb eines geeigneten Wertebereichs gehalten oder dahin zurückgebracht wird.

2. Verfahren zur Bearbeitung nach Anspruch 1, **dadurch gekennzeichnet, dass** der Wert des kapazitiven Anteils der elektrischen Impedanz zwischen dem Elektrodendraht (4) und dem Werkstück (8) während des Zeitintervalls (Te) zwischen zwei aufeinanderfolgenden Impulsen Funkenstroms (IE) gemessen wird.

3. Verfahren zur Bearbeitung nach Anspruch 2, **dadurch gekennzeichnet, dass** der Wert des kapazitiven Anteils aus der elektrischen Impedanz zwischen dem Elektrodendraht (4) und dem Werkstück (8) aus einer Messung der Geschwindigkeit des Anstiegs der elektrischen Spannung (U) zwischen dem Elektrodendraht (4) und dem Werkstück (8) während des Anwendens eines elektrischen Impulses der Zündspannung (UA) abgeleitet wird, bevor diese einen Funken verursacht.

4. Verfahren zur Bearbeitung nach Anspruch 2, **dadurch gekennzeichnet, dass** zwischen dem Elektrodendraht (4) und dem Werkstück (8) ein hochfrequenter elektrischer Strom während der Pausenzeit (Tp) zwischen zwei aufeinanderfolgenden elektrischen Impulsen (UA-IE) eingespeist wird, und die Impedanz des elektrischen Stromkreises bei dieser Hochfrequenz gemessen wird, um den Wert des kapazitiven Anteils der elektrischen Impedanz zwischen dem Elektrodendraht (4) und dem Werkstück (8) abzuleiten.

5. Verfahren zur Bearbeitung nach einem der Ansprüche 1 bis 4, **dadurch gekennzeichnet, dass** die Spitzenintensität (l₀) des Funkenstroms (IE) reduziert wird, wenn sich besagte evaluierte Menge an Gasblasen erhöht, und die Spitzenintensität (I₀) des Funkenstroms (IE) erhöht wird, wenn die besagte evaluierte Menge an Gasblasen abnimmt.

6. Verfahren zur Bearbeitung nach einem der Ansprüche 1 bis 5, **dadurch gekennzeichnet, dass**:
- besagte evaluierte Menge an Gasblasen mit mindestens einer vorab festgelegten Schwelle der Menge verglichen wird,
- wenn besagte evaluierte Menge an Gasblasen besagte mindestens eine vorab festgelegte Schwelle der Menge erreicht oder überschreitet, die Spitzenintensität (I₀) des Funkenstroms für eine vorab festgelegte Haltedauer reduziert wird.

7. Verfahren zur Bearbeitung nach einem der Ansprüche 1 bis 4, **dadurch gekennzeichnet, dass** sich die Pausenzeit (Tp) zwischen besagten aufeinanderfolgenden elektrischen Impulsen (UA-IE) erhöht, wenn besagte evaluierte Menge an Gasblasen erhöht wird, und die Pausenzeit (Tp) zwischen besagten aufeinanderfolgenden elektrischen Impulsen (UA-IE) reduziert wird, wenn besagte evaluierte Menge an Gasblasen abnimmt.

8. Verfahren zur Bearbeitung nach Anspruch 7, **dadurch gekennzeichnet, dass**:
- besagte evaluierte Menge an Gasblasen mit mindestens einer vorab festgelegten Schwelle der Menge verglichen wird,
- wenn besagte evaluierte Menge an Gasblasen besagte mindestens eine vorab festgelegte Schwelle der Menge erreicht oder überschreitet, die Pausenzeit (Tp) zwischen besagten aufeinanderfolgenden elektrischen Impulsen (UA-IE) für eine vorab festgelegte Haltedauer erhöht wird.

9. Vorrichtung zum Bearbeiten eines Werkstücks durch Elektroerosion mit Elektrodendraht, umfassend:
- Mittel (2, 3, 20, 30, 60) zum Strecken des Elektrodendrahts (4) und um ihn in einer Funkenzone (5) in der Nähe des besagten Werkstücks (8) in seiner Längsrichtung (9) anzutreiben,
- Mittel zum Zirkulieren eines Flusses dielektrischer Flüssigkeit in der Funkenzone (5) zwischen dem Elektrodendraht (4) und dem Werkstück (8),
- eine elektrische Versorgungsquelle (10), die elektrisch zwischen dem Werkstück (8) und dem Elektrodendraht (4) verbunden ist und in der Lage ist, elektrische Impulse (UA, IE) zu erzeugen, die in der Funkenzone (5) zwischen dem Elektrodendraht (4) und dem Werkstück (8) Funken verursachen können,
- Steuermittel (40), welche die besagte elektrische Energiequelle (10), die Mittel (50) zum Zirkulieren des Flusses der dielektrischen Flüssigkeit und die anderen Mittel zum Festlegen oder Ändern der Bearbeitungsparameter durch Bestimmen der Eigenschaften der besagten elektrischen Impulse (UA, IE), der Eigenschaften des Flusses der dielektrischen Flüssigkeit und der anderen Bearbeitungsparameter, steuern,
- Messmittel (70) zum Evaluieren der Menge an Gasblasen, die in der Funkenzone (5) zwischen dem Elektrodendraht (4) und dem Werkstück (8) vorhanden sind, und zum Liefern eines repräsentativen Signals (73) besagter evaluierter Menge an Gasblasen an das Steuermittel (40), wobei besagte Messmittel (70) Mittel zum Messen der kapazitiven Komponente der Impedanz des elektrischen Stromkreises umfassen, die durch die Funkenzone (5) zwischen dem Elektrodendraht (4) und dem Werkstück (8) gebildet wird,
- in den Steuermitteln (40) Anpassungsmittel (41), um mindestens einen der Bearbeitungsparameter als Funktion von dem besagten repräsentativen Signal (73) besagter evaluierter Menge an Gasblasen, die in der Funkenbildungszone (5) zwischen dem Elektrodendraht (4) und dem Werkstück (8) vorhanden sind, derart zu modifizieren, um den Wert des besagten Signals (73) innerhalb eines geeigneten Wertebereichs der Signale zu halten oder dahin zurückzubringen.

10. Vorrichtung zum Bearbeiten nach Anspruch 9, **dadurch gekennzeichnet, dass** besagte Mittel zum Messen der kapazitiven Impedanzkomponente eine Messung des Anstiegs der Geschwindigkeit der elektrischen Zündspannung (U) zwischen dem Elektrodendraht (4) und dem Werkstück (8) durchführen.

11. Vorrichtung zum Bearbeiten nach Anspruch 9, **dadurch gekennzeichnet, dass** besagte Mittel zum Messen der kapazitiven Impedanzkomponente umfassen:
- einen Hochfrequenzgenerator, der in der Lage ist, zwischen dem Elektrodendraht (4) und dem Werkstück (8) einen elektrischen Hochfrequenzstrom einzuspeisen,
- Mittel zum Messen der komplexen Impedanz des elektrischen Schaltkreises, in den besagter Hochfrequenzgenerator besagten hochfrequenten elektrischen Strom einspeist,
- Berechnungsmittel zum Extrahieren aus besagter gemessenen komplexen Impedanz den Wert der kapazitiven Komponente der Impedanz des durch die Funkenzone (5) zwischen dem Elektrodendraht (4) und dem Werkstück (8) gebildeten elektrischen Stromkreises.

12. Vorrichtung zum Bearbeiten nach einem der Ansprüche 9 bis 11, **dadurch gekennzeichnet, dass** besagte Anpassungsmittel (41) umfassen:
- einen Komparator zum Vergleichen des besagten repräsentativen Signals (73) der besagten Menge an Gasblasen, die in der Funkenzone (5) zwischen dem Elektrodendraht (4) und dem Werkstück (8) vorhanden sind, mit mindestens einer vorab festgelegten Schwelle des Signals,
- ein aufgezeichnetes Steuerprogramm zum Ansteuern der elektrischen Versorgungsquelle (10), um die Spitzenintensität (l₀) des Funkenstroms (IE) zu reduzieren, wenn besagtes repräsentatives Signal (73) für besagte Menge an Gasblasen, die in der Funkenzone (5) vorhanden sind, die besagte mindestens eine Schwelle des Signals erreicht oder überschreitet.

13. Vorrichtung zum Bearbeiten nach einem der Ansprüche 9 bis 11, **dadurch gekennzeichnet, dass** besagte Anpassungsmittel (41) umfassen:
- einen Komparator zum Vergleichen des besagten repräsentativen Signals (73) der besagten Menge an Gasblasen, die in der Funkenzone (5) zwischen dem Elektrodendraht (4) und dem Werkstück (8) vorhanden sind, mit mindestens einer vorab festgelegten Schwelle des Signals,
- ein aufgezeichnetes Steuerprogramm zum Ansteuern der elektrischen Versorgungsquelle (10), um die Pausenzeit (Tp) zwischen besagten aufeinanderfolgenden elektrischen Impulsen zu erhöhen, wenn besagtes repräsentatives Signal (73) für besagte Menge an Gasblasen, die in der Funkenzone (5) vorhanden sind, die besagte mindestens eine Schwelle des Signals erreicht oder überschreitet.

## Claims

1. - A process for machining a part (8) by electrical discharge machining using an electrode wire (4), wherein:
- the electrode wire (4) is tautened and driven to translate (9) longitudinally in proximity to said part (8) to be machined, in a sparking zone (5) through which a stream of dielectric liquid is moved,
- using an electrical power source (10) connected between the part (8) to be machined and the electrode wire (4), electrical pulses (UA-IE) are generated that cause sparks in the sparking zone (5) between the electrode wire (4) and the part (8) to be machined,
- the quantity of gas bubbles present in the sparking zone (5) between the electrode wire (4) and the part (8) to be machined is evaluated indirectly by measuring the electrical impedance between the electrode wire (4) and the part (8) to be machined during the time interval (Te) between two successive pulses of spark current (IE).
- at least one of the machining parameters is modified, depending on said evaluated quantity of gas bubbles, so as to maintain or return said evaluated quantity of bubbles to a suitable range of values.

2. - The machining process as claimed in claim 1, **characterized in that** the value of the capacitive element of the electrical impedance between the electrode wire (4) and the part (8) to be machined is measured during the time interval (Te) between two successive pulses of spark current (IE).

3. - The machining process as claimed in claim 2, **characterized in that** the value of the capacitive element of the electrical impedance between the electrode wire (4) and the part (8) to be machined is deduced from a measurement of the rise speed of the voltage (U) between the electrode wire (4) and the part (8) to be machined during the application of an initiation electrical-voltage pulse (UA) before the latter causes a spark.

4. - The machining process as claimed in claim 2, **characterized in that** a high-frequency electrical current is injected, between the electrode wire (4) and the part (8) to be machined, during the pause time (Tp) between two successive electrical pulses (UA-IE), and the impedance of the electrical circuit at this high frequency is measured in order to deduce therefrom the value of the capacitive element of the electrical impedance between the electrode wire (4) and the part (8) to be machined.

5. - The machining process as claimed in any of claims 1 to 4, **characterized in that** the peak amplitude (I₀) of the spark current (IE) is decreased when said evaluated quantity of gas bubbles increases, and the peak amplitude (I₀) of the spark current (IE) is increased when said evaluated quantity of gas bubbles decreases.

6. - The machining process as claimed in any of claims 1 to 5, **characterized in that**:
- said evaluated quantity of gas bubbles is compared with at least one preset threshold quantity,
- when said evaluated quantity of gas bubbles reaches or exceeds said at least one preset threshold quantity, the peak amplitude (I₀) of the spark current is decreased for a preset dwell time.

7. - The machining process as claimed in any of claims 1 to 4, **characterized in that** the pause time (Tp) between said successive electrical pulses (UA-IE) is increased when said evaluated quantity of gas bubbles increases, and the pause time (Tp) between said successive electrical pulses (UA-IE) is decreased when said evaluated quantity of gas bubbles decreases.

8. - The machining process as claimed in claim 7, **characterized in that**:
- said evaluated quantity of gas bubbles is compared with at least one preset threshold quantity,
- when said evaluated quantity of gas bubbles reaches or exceeds said at least one preset threshold quantity, the pause time (Tp) between said successive electrical pulses (UA-IE) is increased for a preset dwell time.

9. - A device for machining a part by electrical discharge machining using an electrode wire, comprising:
- means (2, 3, 20, 30, 60) for holding the electrode wire (4) taut and driving it to translate (9) longitudinally in proximity to said part (8) to be machined, in a sparking zone (5),
- means for making a stream of dielectric liquid flow through the sparking zone (5) between the electrode wire (4) and the part (8) to be machined,
- an electrical power source (10) electrically connected between the part (8) to be machined and the electrode wire (4), and able to generate electrical pulses (UA, IE) able to cause sparks in the sparking zone (5) between the electrode wire (4) and the part (8) to be machined,
- controlling means (40) that control said electrical power source (10), the means (50) for making the stream of dielectric liquid flow, and other means for establishing or changing machining parameters by setting the characteristics of said electrical pulses (UA, IE), the characteristics of the stream of dielectric liquid, and the other machining parameters,
- measuring means (70) for evaluating the quantity of gas bubbles present in the sparking zone (5) between the electrode wire (4) and the part (8) to be machined, and for delivering to the controlling means (40) a signal (73) representative of said evaluated quantity of gas bubbles, said measuring means (70) comprising measuring means of the capacitive component of the impedance of the electrical circuit constituted by the sparking zone (5) between the electrode wire (4) and the part (8) to be machined.
- in the controlling means (40), adapting means (41) for modifying at least one of the machining parameters, depending on said signal (73) representative of said evaluated quantity of gas bubbles present in the sparking zone (5) between the electrode wire (4) and the part (8) to be machined, so as to maintain or return the value of said signal (73) to a suitable range of signal values.

10. - The machining device as claimed in claim 9, **characterized in that** said measuring means of the capacitive component of the impedance take a measurement of the rise speed of the initiation voltage (U) between the electrode wire (4) and the part (8) to be machined.

11. - The machining device as claimed in claim 9, **characterized in that** said means for measuring the capacitive impedance component comprise:
- a high-frequency generator able to inject, between the electrode wire (4) and the part (8) to be machined, a high-frequency electrical current,
- means for measuring the complex impedance of the electrical circuit into which said high-frequency generator injects said high-frequency electrical current,
- computing means for extracting, from said measured complex impedance, the value of the capacitive impedance component of the electrical circuit formed by the sparking zone (5) between the electrode wire (4) and the part (8) to be machined.

12. - The machining device as claimed in any of claims 9 to 11, **characterized in that** said adapting means (41) comprise:
- a comparator for comparing, to at least one preset signal threshold, said signal (73) representative of the quantity of gas bubbles present in the sparking zone (5) between the electrode wire (4) and the part (8) to be machined,
- a recorded control program for controlling the electrical power source (10) so as to decrease the peak amplitude (I₀) of the spark current (IE) when said signal (73) representative of said quantity of gas bubbles present in the sparking zone (5) reaches or exceeds said at least one signal threshold.

13. - The machining device as claimed in any of claims 9 to 11, **characterized in that** said adapting means (41) comprises:
- a comparator for comparing, to at least one preset signal threshold, said signal (73) representative of said quantity of gas bubbles present in the sparking zone (5) between the electrode wire (4) and the part (8) to be machined,
- a recorded control program for controlling the electrical power source (10) so as to increase the pause time (Tp) between said successive electrical pulses when said signal (73) representative of said quantity of gas bubbles present in the sparking zone (5) reaches or exceeds said at least one signal threshold.
